# EUROPÄISCHE PATENTSCHRIFT

(11) **EP 1 353 016 B1**
(45) Veröffentlichungstag und Bekanntmachung des Hinweises auf die Patenterteilung: **17.06.2015**
(21) Anmeldenummer: 03007966.9
(22) Anmeldetag: 09.04.2003
(51) Int. Cl.: E03F 7/10

(54) **Vorrichtung zur getrennten Aufnahme wenigstens zweier Medien, insbesondere für Hochdruckspül- und Saugfahrzeuge**
Device for the separate receiving and collection of at least two media, in particular for high pressure purge and suction vehicles
Dispositif de réception et collecte séparées d'au moins deux milieux, en particulier pour des véhicules avec purge à haute pression et aspirateur

(30) Priorität: 09.04.2002 DE 20205478 U
(43) Veröffentlichungstag der Anmeldung: 15.10.2003
(73) Patentinhaber: FFG Flensburger Fahrzeugbau Gesellschaft mbH, 24939 Flensburg (DE)
(72) Erfinder: Bischoff, Rainer, 56154 Boppard (DE); Wolff, Manfred, 17279 Lychen (DE)
(74) Vertreter: Isarpatent

(56) Entgegenhaltungen:
- EP-A- 0 863 045
- DE-A- 2 229 692
- DE-A- 3 230 703
- US-A- 2 303 491
- US-A- 2 758 747

## Beschreibung

Die Erfindung betrifft eine Vorrichtung zur getrennten Aufnahme vorzugsweise zweier Medien, insbesondere für Hochdruckspül- und Saugfahrzeuge.

Zur getrennten Aufnahme von sauberen und verunreinigten flüssigen Medien ist bereits aus dem deutschen Gebrauchsmuster Nr. 299 09 284 eine Kolbenanordnung zur Bildung zweier Kammern in einem zylindrischen vakuumfesten Behälter bekannt, der aus legiertem Stahl oder Kunststoff besteht. Dabei ist eine Kammer für Frischwasser vorgesehen, das beispielsweise für Kanal- oder Straßenreinigung benötigt wird, während die andere Kammer für die Aufnahme des Schmutzwassers nach dem Spülvorgang vorgesehen ist. Mit dem verschiebbaren Kolben wird dabei vorteilhaft sichergestellt, dass anfangs bei Arbeitsbeginn eine maximal mögliche Frischwassermenge zur Verfügung steht und nach dem Abgeben des Frischwassers die Kolbenwand den Schmutzwasseraufnahmeraum zu Lasten des Frischwasserraums vergrößert.

Bei derartigen Behältern mit Kolbenbetrieb besteht jedoch das Problem, dass bei bestimmten Anwendungsbereichen, beispielsweise bei der Industriereinigung, Straßenreinigung oder Landebahnreinigung auf Flughäfen, mit Höchstdrücken bis zu 2500 bar gearbeitet werden muss und dadurch eine hohe Verschmutzungsgefahr besteht, die nicht nur im Kolbenbereich, sondern auch bei Pumpaggregaten zu Beschädigungen führen kann.

US-A-2 758 747 offenbart eine Vorrichtung mit den Merkmalen des Oberbegriffs des Anspruchs 1.

Der Erfindung liegt dem gemäß die Aufgabe zugrunde, eine Vorrichtung der eingangs genannten Gattung verfügbar zu machen, die eine sichere und zuverlässige Reinigung des Behälters und der Kunstsoffblase ermöglichen.

Erfindungsgemäß wird diese Aufgabe durch die im Anspruch 1 genannten Merkmale gelöst. Bevorzugte Merkmale, die die Erfindung vorteilhaft weiterbilden, sind den nachgeordneten Ansprüchen zu entnehmen.

Aufgrund der erfindungsgemäßen Ausgestaltung ist vorteilhaft gewährleistet, dass die Medien in dem Behälter sicher und zuverlässig getrennt sind und der Behälter wechselseitig abstimmbare Volumenmengen gleicher oder unterschiedlicher Medien, insbesondere flüssiger und fluider Medien, aufzunehmen vermag. Es wird dabei beispielsweise für die Anwendung bei der Kanal- oder Straßenreinigung ermöglicht, zu Arbeitsbeginn die maximal mögliche Frischwassermenge zur Verfügung zu stellen, um die größtmögliche Reinigungsleistung zu erzielen. Nach dem Spülvorgang kann dann das verunreinigte Medium in den durch die Abgabe der Frischwassermenge vergrößerten Aufnahmebereich innerhalb des Behälters eingesaugt werden. Bei Arbeitsbeginn steht somit ein maximales Behältervolumen für sauberes Frischwasser und bei Arbeitsende ein maximales Behältervolumen für verunreinigtes Abwasser bzw. Schmutzwasser zur Verfügung, wobei die Vorrichtung eine gewichtsmäßige Optimierung im Hinblick auf ein geringes Eigengewicht eines die Vorrichtung tragenden Anhängers oder eines selbstfahrenden Motorfahrzeugs ermöglicht.

Gemäß einer bevorzugten Ausgestaltung der Erfindung ist die Wandung außen schmutzabweisend beschichtet, z.B. mit Polytetrafluorethylen, wobei die Beschichtung auch oder zusätzlich an der Wandungsinnenseite vorgesehen sein kann.

Die Wandung des wenigstens einen vakuumfesten flexiblen Aufnahmebereichs ist erfindungsgemäß mit einer Kunststoffblase gebildet, die bevorzugt im Behälter austauschbar befestigt ist. Die Kunststoffblase lässt sich dadurch nachträglich montieren und problemlos austauschen und gewährleistet andererseits eine sichere Anordnung im Inneren des Behälters.

Nach einer weiteren Ausgestaltung der Erfindung liegt die Kunststoffblase, die im leeren Zustand wie ein luftleerer Schlauch, ähnlich einem Luftballon, ausgebildet ist, schlaff auf dem wasserdurchlässigen doppelten Behälterboden bzw. Zwischenboden des Behälters auf, wobei die Form der Kunststoffblase an die Form des Behälters derart angepasst ist, dass bei einem Befüllen der Kunststoffblase die Massenkräfte durch den Behälter verteilt aufgenommen werden.

Die Kunststoffblase ist nach einer Weiterbildung im Bereich eines Befüll-/Entnahmestutzens asymmetrisch ausgebildet, insbesondere an ihrem Kopfende, wobei der Befüll-/Entnahmestutzen deutlich unter der Mitte des Behälters liegt, damit keine Spannungen in der Kopfwand der entleerten und durch ein anderes Medium, insbesondere Schmutzwasser, beschwerten Kunststoffblase entsteht.

Gemäß einer weiteren Ausgestaltung der Erfindung ist eine hydraulische Hebeeinrichtung für das Kippen des Behälters zu Reinigungszwecken vorgesehen. Für das Befüllen und Entleeren der Kunststoffblase dient eine Förderpumpe im Außenbereich des Behälters, vorzugsweise an einer Stirnseite des zylinderförmigen Behälters, wobei die Kunststoffblase über eine Filtereinrichtung befüllbar ist. Eine Filtereinrichtung kann auch für das Befüllen der anderen Aufnahmebereiche vorgesehen sein.

Der Behälter ist für das getrennte Aufnehmen unterschiedlicher flüssiger, fluider oder gasförmiger Medien sowie von deren Kombinationen ausgebildet, wobei nicht nur zwei separate Aufnahmebereiche, sondern gegebenenfalls auch bei Bedarf mehrere vakuumfeste flexible Kunststoffblasen vorgesehen sein können.

Gemäß einer bevorzugten Ausgestaltung der Erfindung ist der Behälter auf einem Fahrzeug gelagert, beispielsweise einem Anhänger oder einem selbstfahrenden Motorfahrzeug. Dabei ist der Behälter vorteilhaft auf dem Fahrzeug mit einem hinteren Kippgelenk und einem vorderen losen Auflager für den Angriff einer Hebeeinrichtung gelagert.

In einer weiteren bevorzugten Ausgestaltung der Erfindung weist der Behälter für Spülzwecke Frischwasser in der Kunststoffblase und außerhalb der Kunststoffblase einen Aufnahmebereich für eingesaugtes Schmutzwasser auf, wobei für das Einbringen von Schmutzwasser ein Prall- und Verteilerblech zum Ableiten von Feststoffen zu einem Entleerungsbereich und zum oberseitigen Aufbringen von feststoffarmem bzw. von feststoffbefreitem Schmutzwasser auf die Kunststoffblase angeordnet ist. Dieses Prall- und Verteilerblech ist bevorzugt im Bereich der Mittelachse des Behälters gelagert und weist vorzugsweise in seinem oberen Abschnitt Sieböffnungen für das Verteilen des von Feststoffen befreiten Schmutzwassers auf die Kunststoffblase auf.

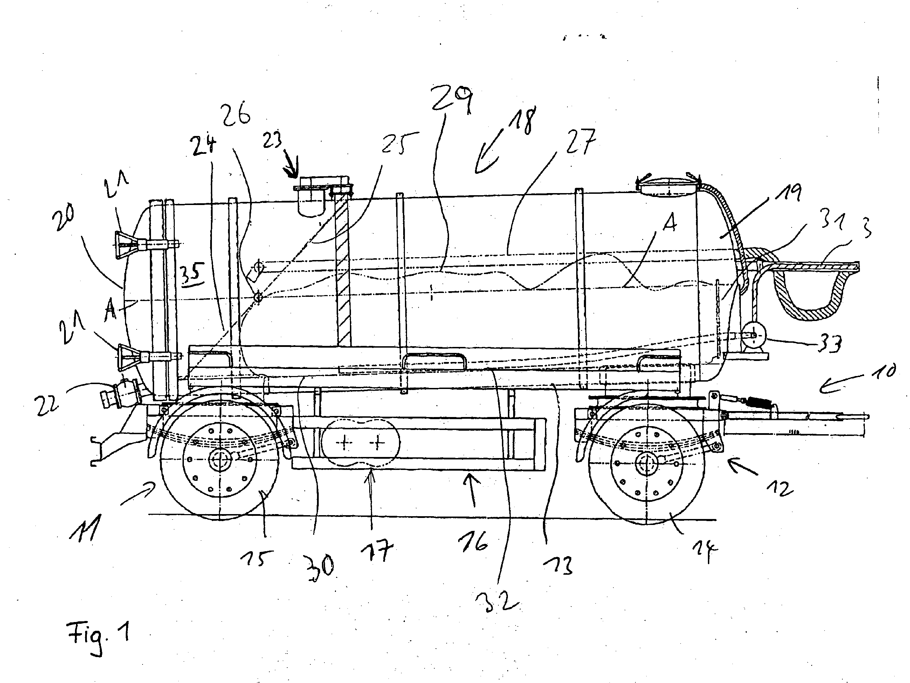

Nachfolgend wird ein Ausführungsbeispiel der Erfindung unter Bezugnahme auf die beigefügte Zeichnung näher erläutert.

In der Figur ist teilweise schematisiert ein zweiachsiger Lkw-Anhänger 10 mit starrer Hinterachse 11 und Lenkdeichsel 12 dargestellt, die durch einen Rahmen 13 verbunden sind. Zwischen den Vorderrädern 14 und den Hinterrädern 15 ist am Rahmen 13 ein Halterahmen 16 befestigt, der zur Aufnahme von Aggregaten, wie Sauggebläse und dergleichen, dient.

Auf dem Rahmen 13 ist ein zylinderförmiger Behälter 18 gelagert, der aus einem legierten Stahl besteht. Der hohlzylinderförmige Behälter 18 ist an seiner vorderen Stirnseite durch eine abgerundete Kappe 19 geschlossen und weist an seiner Rückseite einen abgerundeten Deckel 20 auf, der nach Lösen der Verschlüsse 21 aufschwenkbar ist.

Der Anhänger 10 mit dem Behälter 18 ist als Hochdruckspül- und Saugfahrzeug konzipiert und besitzt unterhalb des Deckels 20 einen Entleerungsstutzen 22 für Schmutzwasser und einen oberseitigen Saugeinlass 23, mit dessen Hilfe Schmutzwasser über eine Leitung 27 in das Innere des Behälters 18 auf eine Prallplatte 24 einsaugbar ist, die im oberen Bereich als Siebwand 25 ausgebildet und bei 26 im Bereich der Mittelachse A-A des zylinderförmigen Behälters 18 gelagert ist. Die eine Leitung 27 führt außerhalb des zylinderförmigen Behälters 18 zu einem nicht dargestellten Ansaugstutzen.

Innerhalb des Behälters 18 befindet sich eine vakuumfeste flexible Kunststoffblase 29, die an ihrer Unterseite an einem wasserdurchlässigen Zwischenboden 30 des Behälters 18 befestigt ist und sich in Längsrichtung von dem Prallblech 24 bis zum vorderen Ende 19 des Behälters 18 zu einem Kopfende 31 erstreckt. Das Innere der Kunststoffblase 29 kann über eine Leitung 32 mittels einer Förderpumpe 33 abgesaugt und über eine Leitung 34 einem nicht dargestellten Hochdruckspülauslass zugeführt werden. Das Kopfende 31 der Kunststoffblase 29 ist asymmetrisch ausgebildet, um einem Entstehen von Spannung in der Kopfwand der entleerten und durch Schmutzwasser beschwerten Kunststoffblase 29 zu begegnen.

Zum Betrieb wird das Hochdruckspül- und Saugfahrzeug zunächst dahingehend vorbereitet, dass in die Kunststoffblase 29 soviel Frischwasser gepumpt wird, so dass der Behälter zu ca. 80 % mit dem Frischwasser gefüllt ist. Die Kunststoffblase 29 liegt dabei nicht nur auf dem wasserdurchlässigen Zwischenboden 30 des Behälters 18 auf, sondern fügt sich aufgrund ihrer Form auch seitlich gleichmäßig an die glatte Innenwandung des zylinderförmigen Behälters 18 derart an, dass eine gute Verteilung und Übertragung der aus der Füllung resultierenden Massenkräfte auf den Behälter 18 erfolgt. Die Prallwand 24 mit der Siebwand 25 im oberen Bereich grenzt dabei einen Restbereich von ca. 20 % des Behälterinneren ab und sorgt gleichzeitig dafür, dass durch die Ansaugung über die Öffnung 23 kein Ansaugen der Kunststoffblase 29 erfolgt.

Die Kunststoffblase 29 ist aus einem hochfesten vakuumdichten, flexiblen Kunststoff hergestellt und auf ihrer Außenseite schmutzabweisend beschichtet, beispielsweise mit Teflon®. Sie kann in nicht dargestellter Weise durch eine Flansch- oder Schraubverbindung lösbar montiert sein, um einen problemlosen Austausch oder eine nachträgliche Montage in einen vorhandenen Behälter zu ermöglichen.

Zum Betrieb wird das zum Reinigen durch Abpumpen entnommene Frischwasser nach Gebrauch als partikelhaltiges Schmutzwasser verunreinigt in den hinteren Bereich 35 des Behälters 18 über die Rohrverbindung 27 angesaugt, wobei der Saugdruck über die Ansaugöffnung 23 aufgebracht wird. Die im Schmutzwasser enthaltenen Feststoffe werden auf das in der Mitte gelagerte Prallblech 24 geleitet und in dem hinteren Behälterbereich vor die Entleerungsklappe 20 geleitet. Das Prallblech 24 ist im oberen Bereich als Siebwand 25 ausgebildet, und das durch die Sieböffnungen tretende quasi vorgefilterte Wasser wird von oben auf die Kunststoffblase 29 geleitet. Dabei wird mit zunehmender Schmutzwassermenge der Druck auf die Kunststoffblase 29 während des Entleerens aufgebracht, wodurch sich das Abpumpen des Frischwassers aus der Kunststoffblase erleichtert. Wenn das Frischwasser aus der Kunststoffblase 29 vollständig abgepumpt ist, steht das gesamte Behältervolumen für verunreinigtes Wasser zur Verfügung. Dabei besteht die Möglichkeit, wenig verunreinigtes Schmutzwasser zwischendurch kurzfristig über den hinteren Entleerungsstutzen 22 abzulassen.

Zusätzlich kann in nicht dargestellter Weise noch das vollständige Entleeren und Reinigen durch ein Kippen des Behälters und Öffnen der hinteren Entleerungsklappe 20 erleichtert werden.

Die erfindungsgemäße Vorrichtung lässt sich vorteilhaft bei jedem Behälterfahrzeug einsetzen und kann unabhängig von der Art und Aggressivität des Mediums eine hervorragende Transportauslastung für Behälterfahrzeuge gewährleisten. Denkbar ist beispielsweise ein Füllen des Behälters 18 mit einer aggressiven Flüssigkeit, wie beispielsweise Salzsäure, wobei der Behälter vollständig gefüllt ist und die Kunststoffblase 29 leer ist. Ein Behälterfahrzeug kann eine derartige Flüssigkeit zu einem Ort bringen, dort abgeben und dann für den Rückweg ein anderes Medium, beispielsweise Wein, in der Kunststoffblase zurücktransportieren. Dadurch können vorteilhaft umweltbelastende Leerfahrten entfallen und optimale Kapazitätsauslastungen bei dem Transport von Flüssigkeiten, Fluiden und Gasen realisiert werden. Nach Vornahme entsprechender Reinigung können dann die Behälterfahrzeuge wieder für einen neuen Einsatz mit unterschiedlichen Medien verwendet werden.

## Patentansprüche

1. Vorrichtung zur getrennten Aufnahme wenigstens zweier Medien, insbesondere für Hochdruckspül- und -Saugfahrzeuge, bestehend aus
einem vakuumfesten zylinderförmigen Behälter (18), wobei in dem Behälter (18) für jedes Medium ein veränderbarer Aufnahmebereich (29, 35) gebildet ist,
wobei wenigstens ein Aufnahmebereich (29) mit einer vakuumfesten flexiblen Kunststoffblase (29) gebildet ist, **dadurch gekennzeichnet, daß** die Kunststoffblase (29) an ihrer Unterseite an einem wasserdurchlässigen Zwischenboden (30) des Behälters (18) befestigt ist.

2. Vorrichtung nach Anspruch 1,
**dadurch gekennzeichnet,**
**dass** die Wandung (29) schmutzabweisend beschichtet ist.

3. Vorrichtung nach Anspruch 1 oder 2,
**dadurch gekennzeichnet,**
**dass** die Kunststoffblase (29) im Behälter (18) austauschbar befestigt ist.

4. Vorrichtung nach einem der vorangehenden Ansprüche,
**dadurch gekennzeichnet,**
**dass** die Kunststoffblase (29) im leeren Zustand im Bereich des Behälterbodens aufliegt.

5. Vorrichtung nach einem der vorangehenden Ansprüche,
**dadurch gekennzeichnet,**
**dass** die Form der Kunststoffblase (29) an die Form des Behälters (18) angepasst ist.

6. Vorrichtung nach einem der vorangehenden Ansprüche,
**dadurch gekennzeichnet,**
**dass** die Kunststoffblase (29) im Bereich eines Befüll-/Entnahmestutzens asymmetrisch ausgebildet ist.

7. Vorrichtung nach einem der vorangehenden Ansprüche,
**dadurch gekennzeichnet,**
**dass** eine hydraulische Hebeeinrichtung für das Kippen des Behälters (18) vorgesehen ist.

8. Vorrichtung nach einem der vorangehenden Ansprüche,
**dadurch gekennzeichnet,**
**dass** für das Befüllen und Entleeren der Kunststoffblase (29) eine Förderpumpe (33) im Außenbereich des Behälters (18), vorzugsweise an einer Stirnseite, vorgesehen ist.

9. Vorrichtung nach Anspruch 8,
**dadurch gekennzeichnet,**
**dass** die Kunststoffblase (29) über eine Filtereinrichtung befüllbar ist.

10. Vorrichtung nach einem der vorangehenden Ansprüche,
**dadurch gekennzeichnet,**
**dass** der Behälter (18) für die getrennte Aufnahme unterschiedlicher flüssiger, fluider oder gasförmiger Medien sowie deren Kombinationen ausgebildet ist.

11. Vorrichtung nach einem der vorangehenden Ansprüche,
**dadurch gekennzeichnet,**
**dass** der Behälter (18) auf einem Fahrzeug (10) gelagert ist.

12. Vorrichtung nach Anspruch 7 oder 11,
**dadurch gekennzeichnet,**
**dass** der Behälter (18) auf einem Fahrzeug (10) mit einem hinteren Kippgelenk und einem vorderen losen Auflager für den Angriff einer Hebeeinrichtung gelagert ist.

13. Vorrichtung nach einem der vorangehenden Ansprüche,
**dadurch gekennzeichnet,**
**dass** der Behälter (18) für Spülzwecke Frischwasser in der Kunststoffblase (29) und außerhalb der Kunststoffblase (29) einen Aufnahmebereich (35) für angesaugtes Schmutzwasser aufweist, wobei für das Einbringen von Schmutzwasser in den Behälter (18) ein Prall- und Verteilerblech (24) zum Ableiten von Feststoffen zu einem Entleerungsbereich und zum oberseitigen Aufbringen von Schmutzwasser auf die Kunststoffblase (29) angeordnet ist.

14. Vorrichtung nach Anspruch 13,
**dadurch gekennzeichnet,**
**dass** das Prall- und Verteilerblech (24) im Bereich der Mittelachse (A-A) des Behälters (18) gelagert (26) ist.

15. Vorrichtung nach Anspruch 13 oder 14,
**dadurch gekennzeichnet,**
**dass** das Pra11- und Verteilerblech (24) in seinem oberen Abschnitt eine Siebwand (25) für das Verteilen des von Feststoffen befreiten Schmutzwassers auf die Kunststoffblase (29) aufweist.

## Claims

1. Device for separately accommodating at least two media, in particular for high-pressure flushing and suction vehicles, consisting of
a vacuum-tight cylindrical container (18), a variable accommodation region (29, 35) being formed in the container (18) for each medium,
at least one accommodation region (29) being formed with a vacuum-tight flexible plastics material bladder (29), **characterised in that** the plastics material bladder (29) is fixed at the underside thereof to a water-permeable intermediate floor (30) of the container (18).

2. Device according to claim 1, **characterised in that** the wall (29) is coated in a dirt-repellent manner.

3. Device according to either claim 1 or claim 2, **characterised in that** the plastics material bladder (29) is fixed replaceably in the container (18).

4. Device according to any of the preceding claims, **characterised in that** when empty the plastics material bladder (29) rests in the region of the container floor.

5. Device according to any of the preceding claims, **characterised in that** the shape of the plastics material bladder (29) is adapted to the shape of the container (18).

6. Device according to any of the preceding claims, **characterised in that** the plastics material bladder (29) is formed asymmetrically in the region of a filling/withdrawal socket.

7. Device according to any of the preceding claims, **characterised in that** a hydraulic lifting device is provided for tipping the container (18).

8. Device according to any of the preceding claims, **characterised in that** a feed pump (33) is provided in the outer region of the container (18), preferably at an end face, for filling and emptying the plastics material bladder (29).

9. Device according to claim 8, **characterised in that** the plastics material bladder (29) is fillable via a filter device.

10. Device according to any of the preceding claims, **characterised in that** the container (18) is formed for separately accommodating different liquid, fluid or gaseous media and combinations thereof.

11. Device according to any of the preceding claims, **characterised in that** the container (18) is mounted on a vehicle (10).

12. Device according to either claim 7 or 11, **characterised in that** the container (18) is mounted on a vehicle (10) comprising a rear tipping articulation and a front loose seat for the action of a lifting device.

13. Device according to any of the preceding claims, **characterised in that** the container (18) comprises fresh water in the plastics material bladder (29) for flushing purposes and an accommodation region (35) outside the plastics material bladder (29) for sucked-up wastewater, a deflector and separator plate (24), for diverting solids to an emptying region and for raising wastewater to the plastics material bladder (29), being provided for introducing wastewater into the container (18).

14. Device according to claim 13, **characterised in that** the deflector and separator plate (24) is mounted (26) in the region of the central axis (A-A) of the container (18).

15. Device according to either claim 13 or claim 14, **characterised in that** the deflector and separator plate (24) comprises a sieve wall (25) in the upper portion thereof for distributing the wastewater which has been freed of solids to the plastics material bladder (29).

## Revendications

1. Dispositif de réception séparée d'au moins deux milieux, en particulier pour véhicules de rinçage à haute pression et d'aspiration, composé d'un récipient de forme cylindrique étanche au vide (18), une zone de réception (29, 35) modifiable étant formée dans le récipient (18) pour chaque milieu, au moins une zone de réception (29) étant formée d'une bulle de plastique (29) flexible étanche au vide, **caractérisé par le fait que** la bulle de plastique (29) est fixée au niveau de sa face inférieure à un plateau intermédiaire (30) perméable à l'eau du récipient (18).

2. Dispositif selon la revendication 1, **caractérisé par le fait que** la paroi (29) est revêtue d'un agent anti-salissure.

3. Dispositif selon la revendication 1 ou 2, **caractérisé par le fait que** la bulle de plastique (29) est fixée dans le récipient (18) de manière échangeable.

4. Dispositif selon l'une quelconque des revendications précédentes, **caractérisé par le fait que** la bulle de plastique (29) repose à l'état vide dans la zone du fond du récipient.

5. Dispositif selon l'une quelconque des revendications précédentes, **caractérisé par le fait que** la forme de la bulle de plastique (29) est adaptée à la forme du récipient (18).

6. Dispositif selon l'une quelconque des revendications précédentes, **caractérisé par le fait que** la bulle de plastique (29) est réalisée dans la zone d'un embout de remplissage/prélèvement.

7. Dispositif selon l'une quelconque des revendications précédentes, **caractérisé par le fait qu'**un moyen de levage hydraulique est prévu pour le basculement du récipient (18).

8. Dispositif selon l'une quelconque des revendications précédentes, **caractérisé par le fait qu'**une pompe d'alimentation (33) est prévue pour le remplissage et le vidage de la bulle de plastique (29) dans la zone extérieure du récipient (18), préférentiellement au niveau d'une face frontale.

9. Dispositif selon la revendication 8, **caractérisé par le fait que** la bulle en plastique (29) peut être remplie par l'intermédiaire d'un moyen de filtre.

10. Dispositif selon l'une quelconque des revendications précédentes, **caractérisé par le fait que** le récipient (18) est réalisé pour la réception séparée de différents moyens liquides, fluides ou gazeux ainsi qu'une combinaison de ceux-ci.

11. Dispositif selon l'une quelconque des revendications précédentes, **caractérisé par le fait que** le récipient (18) est monté sur un véhicule (10).

12. Dispositif selon la revendication 7 ou 11, **caractérisé par le fait que** le récipient (18) est monté sur un véhicule (10) avec une articulation de basculement arrière et un support avant amovible pour l'engagement d'un moyen de levage.

13. Dispositif selon l'une quelconque des revendications précédentes, **caractérisé par le fait que** le récipient (18) présente, dans des buts de rinçage, de l'eau propre dans la bulle de plastique (29) et présente en dehors de la bulle de plastique (29) une zone de réception (35) pour l'eau sale aspirée, une plaque de renvoi et de distribution (24) pour l'évacuation de matières solides vers une zone de vidage et pour l'application par le haut d'eau sale étant disposée sur la bulle de plastique (29) pour l'apport d'eau sale dans le récipient (18).

14. Dispositif selon la revendication 13, **caractérisé par le fait que** la plaque de renvoi et de distribution (24) est montée (26) dans la zone de l'axe central (A-A) du récipient (18).

15. Dispositif selon la revendication 13 ou 14, **caractérisé par le fait que** la plaque de renvoi et de distribution (24) présente dans sa section supérieure une paroi de tamisage (25) pour la répartition de l'eau sale libérée de matières solides sur la bulle de plastique (29).
